# EUROPEAN PATENT SPECIFICATION

(11) **EP 3 095 653 B1**
(45) Date of publication and mention of the grant of the patent: **11.07.2018**
(21) Application number: 16160989.6
(22) Date of filing: 17.03.2016
(51) Int. Cl.: B60T 11/18

(54) **MASTER CYLINDER OPERATING MECHANISM**
HAUPTZYLINDERBETÄTIGUNGSMECHANISMUS
MÉCANISME DE FONCTIONNEMENT DE CYLINDRE MAÎTRE

(30) Priority: 19.03.2015 JP 2015056950
(43) Date of publication of application: 23.11.2016
(73) Proprietor: Toyota Jidosha Kabushiki Kaisha, Toyota-shi, Aichi-ken 471-8571 (JP)
(72) Inventor: OTA, Masayoshi, Aichi 471-8571 (JP); YOSHIDA, Takatsugu, Aichi 471-8571 (JP)
(74) Representative: J A Kemp

(56) References cited:
- JP-A- 2012 210 837
- JP-U- S59 190 663
- US-A1- 2009 179 485

## Description

### BACKGROUND

### 1. Technical Field

The disclosure relates generally to a master cylinder operating mechanism, and more specifically to a master cylinder operating mechanism including a stopper provided in a master cylinder.

### 2. Description of Related Art

In a hydraulically-operated system mounted in a vehicle, such as a clutch mechanism or a brake mechanism, an operating force is transmitted to a master cylinder from an operation pedal operated by a driver, and the operating force is converted into a hydraulic operating force by the hydraulic pressure in the master cylinder. In such a hydraulically-operated system, a lever on the operation pedal side is connected to a pushrod that inputs the operating force into the master cylinder.

This kind of master cylinder operating mechanism is described in, for example, Japanese Patent Application Publication No. 2003-063367 (JP 2003-063367 A). The master cylinder operating mechanism is configured such that a guiding member that guides a piston is fitted to an opening end of a cylinder body. The cylinder body of the master cylinder operating mechanism is secured to a dashboard of a vehicle with a bolt.

JP S59 190663 discloses a master cylinder operating mechanism.

US 2009/0179485 discloses a vehicle brake device of an electronic hydraulic brake system. The vehicle brake device of an electronic hydraulic brake system includes an input shaft coupled to a brake pedal, a pedal operation detector which detects pedal force of a driver, a pedal simulator coupled to the input shaft in a control housing to supply pedal repulsive force, a master cylinder which delivers a hydraulic pressure to a wheel brake when a braking pressure is formed by the brake pedal, a control piston which is adjacent to a first piston of the master cylinder to deliver a hydraulic pressure to the first piston, a control chamber which controls a pressure of the master cylinder between the control piston and the pedal simulator, and a hydraulic pressure supply which delivers a hydraulic pressure to the control chamber as required by a driver, wherein the pedal simulator includes a pedal simulator piston which slidably moves in the control housing, a pressing member which reciprocates corresponding to reciprocating motion of the input shaft in the pedal simulator piston, a simulator piston provided in the pedal simulator piston to slidably move corresponding to movement of the pressing member, and a push rod which is accommodated in the pressing member while being spaced apart from a bottom wall of a guide groove by passing through the pedal simulator piston and the simulator piston from the control piston to the input shaft such that the input shaft is mechanically separated from the first piston in a normal operation mode, and wherein a diameter of the master cylinder is greater than a diameter of the simulator piston, and a diameter of the control piston is greater than a diameter of the master cylinder. The vehicle brake device an electronic hydraulic brake (EHB) system is capable of quickly forming a braking pressure and suitable for generating a greater braking pressure under the same pedal force.

### SUMMARY

In the master cylinder operating mechanism as described above, a sliding motion of the piston in response to the operation of a clutch pedal is restricted by a stopper provided on the inner side of the guiding member. When the stopper restricts a sliding motion of the piston in a direction in which the piston comes out of the cylinder body, the guiding member receives a load that acts in a direction in which the guiding member moves away from the cylinder body. Thus, the guiding member may be disconnected from the cylinder body.

The disclosure provides a master cylinder operating mechanism configured to inhibit a guiding member from being disconnected from a cylinder body.

The invention concerns a vehicle according to claim 1 and comprising a master cylinder operating mechanism. The master cylinder operating mechanism includes a cylinder body, a guiding member, a piston, a pushrod, and a stopper member. The cylinder body has an opening, and the opening is at one end of the cylinder body. The guiding member is engaged with the opening of the cylinder body, and the guiding member is a member different from the cylinder body (i.e., a member that is prepared separately from the cylinder body). The piston is slidably accommodated inside the cylinder body and the guiding member. The pushrod is connected to an end portion of the piston, and the pushrod is configured to slide the piston in response to a pedal operating force generated by a driver. The stopper member is provided on an inner side of the guiding member. The stopper member is configured to restrict a sliding motion of the piston by coming into contact with the pushrod when the pushrod slides in a direction in which the pushrod is pulled out of the guiding member. A surface of the guiding member is in contact with a dashboard of the vehicle. The dashboard separates the engine compartment and a vehicle cabin from each other. The surface of the guiding member in contact with the dashboard faces the engine compartment-side surface of the dashboard in the direction in which the pushrod is pulled out of the guiding member.

With the configuration described above, for example, when a pushrod slides inside a cylinder body and a guiding member in response to an operational input and then comes into contact with a stopper member of the guiding member, the guiding member receives a load that acts in a direction in which the pushrod is pulled out of the guiding member. However, the surface of the guiding member is in contact with the dashboard, and the surface of the guiding member in contact with the dashboard faces the engine compartment-side surface of the dashboard in the direction in which the pushrod is pulled out of the guiding member. Thus, displacement of the guiding member in a direction in which the guiding member comes out of the cylinder body is restricted by the engine compartment-side surface of the dashboard, so that the guiding member is inhibited from being disconnected from the cylinder body.

### BRIEF DESCRIPTION OF THE DRAWINGS

Features, advantages, and technical and industrial significance of disclosed embodiments will be described below with reference to the accompanying drawings, in which like numerals denote like elements, and wherein:
FIG. 1 is a diagram schematically illustrating the configuration of a vehicle clutch provided with a master cylinder operating mechanism according to a disclosed embodiment;
FIG. 2 is a sectional view schematically illustrating the master cylinder operating mechanism according to the disclosed embodiment; and
FIG. 3 is an enlarged view illustrating a main portion of the master cylinder operating mechanism according to the disclosed embodiment.

### DETAILED DESCRIPTION OF EMBODIMENTS

Hereinafter, an example embodiment will be described with reference to the accompanying drawings.

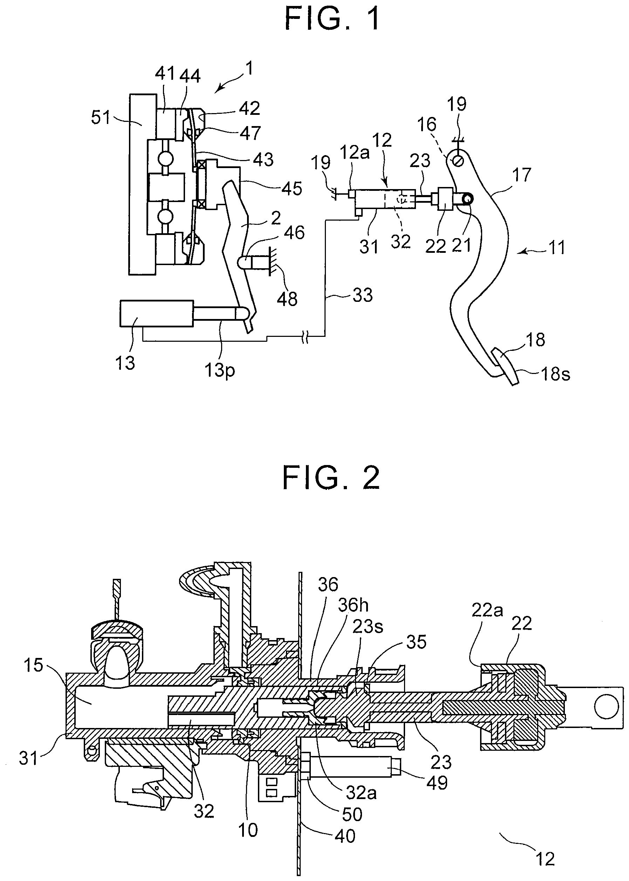

FIG. 1 and FIG. 2 illustrate the schematic configuration of a vehicle clutch provided with a master cylinder operating mechanism according to a disclosed embodiment.

The configuration of the vehicle clutch will be described below. As illustrated in FIG. 1, the vehicle clutch of the present embodiment is configured such that a hydraulically-operated clutch mechanism 1, which is a friction clutch, is operated in response to a depressing operation of a clutch pedal 11 that is pivotally displaced within a displaceable range. An operation system for the vehicle clutch includes the clutch pedal 11, a master cylinder 12, and a release cylinder 13. The master cylinder 12 generates a hydraulic pressure corresponding to the degree to which the clutch pedal 11 is depressed, and then supplies the hydraulic pressure to the hydraulically-operated clutch mechanism 1. The release cylinder 13 is operated in response to the hydraulic pressure from the master cylinder 12, thereby operating a release fork 2 of the hydraulically-operated clutch mechanism 1. The master cylinder operating mechanism according to the present embodiment is disposed within a region from the clutch pedal 11 to the master cylinder 12.

The clutch pedal 11 is an assembly of a support shaft 16, a lever 17, and a pedal 18. The support shaft 16 is rotatably supported by a support member 19 on the vehicle body side. The lever 17 is connected to the support shaft 16. The pedal 18 is secured to an end of the lever 17.

The lever 17 has a generally rectangular sectional shape. The lever 17 is supported by the support shaft 16 with the direction of the long sides of the generally rectangular section being parallel to the vehicle front-rear direction. The pedal 18 is provided at the end of the lever 17, and has a tread surface 18a to be depressed by a driver.

A base end side portion of the lever 17 is supported via the support shaft 16 by the support member 19 on the vehicle body side, such that the lever 17 is pivotable in the vehicle-height direction and the vehicle front-rear direction. The lever 17 is configured to input, at its intermediate portion, an operating force into the master cylinder 12 via a clevis pin 21, a clevis 22, and a pushrod 23.

The master cylinder 12 is configured in the following manner. A piston 32 is accommodated in a cylinder body 31 pivotably supported via a pin 12a by the support member 19 on the vehicle body side. The pushrod 23 is engaged with a rod portion 32a fitted in an end portion of the piston 32. The rod portion 32a is in the form of a clip.

When the clutch pedal 11 is operated in a direction in which the piston 32 is pushed into the master cylinder 12, the master cylinder 12 pressurizes the hydraulic fluid in a pressurizing chamber 15 defined between the cylinder body 31 and the piston 32, and outputs the hydraulic pressure toward the release cylinder 13 through a clutch tube 33.

The hydraulically-operated clutch mechanism 1 is configured in the following manner. A clutch disc 41 spline-fitted to a transmission input shaft (not illustrated) faces a flywheel 51 and the clutch disc 41 is covered, from its rear surface side, with a clutch cover 42. A diaphragm spring 43 held by the clutch cover 42 presses, at its outer peripheral portion, the clutch disc 41 via a pressure plate 44, thereby pressing the clutch disc 41 against the flywheel 51. The pressure plate 44 is supported by the clutch cover 42 so as to be movable in the axial direction.

The release fork 2 is turnably supported by a housing 48 via a support pin 46. When the release fork 2 turns counterclockwise in FIG. 2 in response to an operating force from the release cylinder 13, the central portion of the diaphragm spring 43 is pressed toward the flywheel 51 via a release bearing 45. When the diaphragm spring 43 is subjected to an engagement cancellation (disengagement) operation from the release cylinder 13 side via the release bearing 45, the diaphragm spring 43 deflects such that the outer peripheral portion thereof moves away from the flywheel 51. In this way, the pressure plate 44 stops pressing the clutch disc 41 against the flywheel 51. In order to appropriately achieve both pressurization of the pressure plate 44 during clutch engagement and deflection of the diaphragm spring 43 for clutch disengagement, the diaphragm spring 43 is supported by the clutch cover 42 via a pivot ring 47 at a prescribed radial position, and thus the diaphragm spring 43 is deflected about the pivot ring 47 in the axial direction or returns to its original shape obtained immediately after the assembly.

As illustrated in FIG. 2, a guiding member 36 fitted to the cylinder body 31 has an operating hole 36h in which the rod portion 32a of the piston 32 slides. A stopper member 35 having a cylindrical shape is provided in the operating hole 36h so as to be integral with the guiding member 36. The stopper member 35 restricts displacement of the pushrod 23 by coming into contact with the pushrod 23.

When the clutch pedal 11 is depressed to disengage the hydraulically-operated clutch mechanism 1, a stopper portion 22a of the clevis 22 provided at an end of the pushrod 23, the end being close to the clutch pedal 11, comes into contact with the guiding member 36, thereby restricting excessive displacement of the clutch pedal 11.

The cylinder body 31 and the guiding member 36 each have a cylindrical shape such that the piston 32 fitted to the pushrod 23 is allowed to slide inside the cylinder body 31 and the guiding member 36. Further, the cylinder body 31 and the guiding member 36 are liquid-tight, so that displacement of the piston 32 pressurizes the hydraulic fluid inside the pressurizing chamber 15 defined between the cylinder body 31 and the piston 32.

In the present embodiment, the guiding member 36 is welded to the cylinder body 31 with the guiding member 36 accommodated in the cylinder body 31. A welded area 10 where the guiding member 36 and the cylinder body 31 are welded to each other may be a plurality of steps as illustrated in FIG. 2.

The cylinder body 31 is secured with a bolt 49 and a nut 50. The bolt 49 passes through the dashboard 40 from an engine compartment into a vehicle cabin. The dashboard 40 has a through-hole through which the master cylinder 12 is passed. The master cylinder 12 is secured while being passed through the dashboard 40.

When the master cylinder 12 is viewed from its axial direction, the diameter of a surface of the guiding member 36 at which the guiding member 36 is in contact with the dashboard 40 is greater than the diameter of the through-hole of the dashboard 40 through which the master cylinder 12 is passed. Thus, the guiding member 36 is configured to be brought into contact with the dashboard 40.

Next, the operation of the present embodiment will be described.

In the master cylinder operating mechanism of the present embodiment configured as described above, the stopper function of stopping the master cylinder 12 is carried out when the pushrod 23 that operates the master cylinder 12 is displaced in response to an operational input from the clutch pedal 11. That is, in the present embodiment, when the clutch pedal 11 is operated in the clutch engaging direction to engage the hydraulically-operated clutch mechanism 1, a stopper member 23s of the pushrod 23 comes into contact with the stopper member 35 provided on the inner side of the guiding member 36, thereby restricting displacement of the pushrod 23.

In the present embodiment, when the stopper member 23s of the pushrod 23 comes into contact with the stopper member 35 provided on the inner side of the guiding member 36, the guiding member 36 receives a load that acts in a direction in which the pushrod 23 comes out of the cylinder body 31. However, the contact of the dashboard 40 with the guiding member 36 restricts displacement of the guiding member 36. In this way, displacement of the guiding member 36 in a direction in which the guiding member 36 comes out of the cylinder body 31 is restricted, so that the guiding member 36 is inhibited from being disconnected from the cylinder body 31.

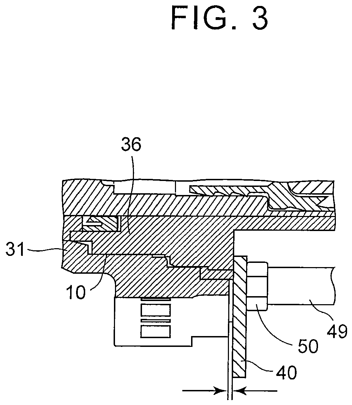

Further, in the present embodiment, a clearance is provided between the dashboard 40 and the cylinder body 31, as illustrated in FIG. 3. The distance between the dashboard 40 and the cylinder body 31 is set to such a distance that a collision between the dashboard 40 and the cylinder body 31 is prevented when the stopper member 23s of the pushrod 23 comes into contact with the stopper member 35 provided on the inner side of the guiding member 36 and the dashboard 40 is deformed due to a load received from the guiding member 36. Thus, the following situation is less likely to arise: the dashboard 40 and the cylinder body 31 come into contact with each other due to deformation of the dashboard 40, a load is applied from the dashboard 40 to the cylinder body 31 in a direction opposite to the direction in which a load is transmitted from the guiding member 36 to the dashboard 40, and thus the guiding member 36 is disconnected from the cylinder body 31.

As a result, disconnection of the guiding member 36 from the cylinder body 31 due to the stopper function carried out upon contact between the stopper member 23s and the stopper member 35 is less likely to occur (i.e., the guiding member 36 is inhibited from being disconnected from the cylinder body 31 even when the stopper member 23s and the stopper member 35 come into contact with each other and thus the stopper function is carried out).

## Claims

1. A vehicle including an engine disposed in an engine compartment, a dashboard (40) and a master cylinder operating mechanism provided in the vehicle, the master cylinder operating mechanism comprising:
a cylinder body (31) having an opening, the opening being at one end of the cylinder body (31);
a guiding member (36) engaged with the opening of the cylinder body (31), the guiding member (36) being a member different from the cylinder body (31);
a piston (32) slidably accommodated inside the cylinder body (31) and the guiding member (36);
a pushrod (23) connected to an end portion of the piston (32), the pushrod (23) being configured to slide the piston (32) in response to a pedal operating force generated by a driver; and
a stopper member (35) provided on an inner side of the guiding member (36), the stopper member (35) being configured to restrict a sliding motion of the piston (32) by coming into contact with the pushrod (23) when the pushrod (23) slides in a direction in which the pushrod (23) is pulled out of the guiding member (36); and
wherein a surface of the guiding member (36) is in contact with the dashboard (40) of the vehicle, the dashboard (40) separating the engine compartment and a vehicle cabin from each other, and the surface of the guiding member (36) in contact with the dashboard (40) facing the engine compartment-side surface of the dashboard (40) in the direction in which the pushrod (23) is pulled out of the guiding member (36); **characterised in that** the cylinder body (2) is secured to the dashboard (40) with a clearance between the dashboard (40) and the cylinder body (31).

## Patentansprüche

1. Fahrzeug, umfassend einen Motor, der in einem Motorraum angeordnet ist, ein Armaturenbrett (40) und einen im Fahrzeug bereitgestellten Hauptzylinder-Betätigungsmechanismus, wobei der Hauptzylinder-Betätigungsmechanismus Folgendes umfasst:
einen Zylinderkörper (31) mit einer Öffnung, wobei die Öffnung an einem Ende des Zylinderkörpers (31) ist;
ein Führungselement (36), das mit der Öffnung des Zylinderkörpers (31) in Eingriff ist, wobei das Führungselement (36) ein Element ist, das sich vom Zylinderkörper (31) unterscheidet;
einen Kolben (32), der verschiebbar im Inneren des Zylinderkörpers (31) und des Führungselements (36) untergebracht ist;
eine Schubstrebe (23), die mit einem Endabschnitt des Kolbens (32) verbunden ist, wobei die Schubstrebe (23) konfiguriert ist, den Kolben (32) als Reaktion auf eine durch einen Fahrer erzeugte Pedalbetätigungskraft zu verschieben; und
ein Anschlagelement (35), das an einer Innenseite des Führungselements (36) bereitgestellt ist, wobei das Anschlagelement (35) konfiguriert ist, eine Verschiebebewegung des Kolbens (32) durch Inkontaktkommen mit der Schubstrebe (23) einzuschränken, wenn sich die Schubstrebe (23) in eine Richtung verschiebt, in die die Schubstrebe (23) aus dem Führungselement (36) gezogen wird; und
wobei eine Oberfläche des Führungselements (36) in Kontakt mit dem Armaturenbrett (40) des Fahrzeugs ist, wobei das Armaturenbrett (40) den Motorraum und eine Fahrzeugkabine voneinander trennt, und die Oberfläche des Führungselements (36) in Kontakt mit dem Armaturenbrett (40) der Motorraum-seitigen Oberfläche des Armaturenbretts (40) in die Richtung zugewandt ist, in die die Schubstrebe (23) aus dem Führungselement (36) gezogen wird; **dadurch gekennzeichnet, dass** der Zylinderkörper (2) an dem Armaturenbrett (40) mit einem Abstand zwischen dem Armaturenbrett (40) und dem Zylinderkörper (31) befestigt ist.

## Revendications

1. Véhicule comprenant un moteur disposé dans un compartiment de moteur, un tableau de bord (40) et un mécanisme d'actionnement de maître-cylindre disposé dans le véhicule, le mécanisme d'actionnement de maître-cylindre comprenant :
un corps de cylindre (31) présentant une ouverture, l'ouverture étant située à une extrémité du corps de cylindre (31) ;
un élément de guidage (36) en contact avec l'ouverture du corps de cylindre (31), l'élément de guidage (36) étant un élément différent du corps de cylindre (31) ;
un piston (32) logé de manière coulissante à l'intérieur du corps de cylindre (31) et de l'élément de guidage (36) ;
une tige poussoir (23) reliée à une partie d'extrémité du piston (32), la tige poussoir (23) étant conçue pour faire coulisser le piston (32) en réponse à une force d'actionnement de pédale générée par un conducteur ; et
un élément de butée (35) disposé sur un côté interne de l'élément de guidage (36), l'élément de butée (35) étant conçu pour restreindre un mouvement coulissant du piston (32) en venant en contact avec la tige poussoir (23) lorsque la tige poussoir (23) coulisse dans une direction dans laquelle la tige poussoir (23) est retirée de l'élément de guidage (36) ; et
une surface de l'élément de guidage (36) étant en contact avec le tableau de bord (40) du véhicule, le tableau de bord (40) séparant le compartiment de moteur et l'habitacle du véhicule l'un de l'autre, et la surface de l'élément de guidage (36) en contact avec le tableau de bord (40) face à la surface côté compartiment de moteur du tableau de bord (40) dans la direction dans laquelle la tige poussoir (23) est retirée de l'élément de guidage (36) ; **caractérisé en ce que** le corps de cylindre (2) est fixé au tableau de bord (40) avec un espacement entre le tableau de bord (40) et le corps de cylindre (31).
